**Europäisches Patentamt**

(19) **European Patent Office**

**Office européen des brevets**

(11) Publication number : **0 409 652 B1**

## EUROPEAN PATENT SPECIFICATION

(45) Date of publication of patent specification :
**15.03.95 Bulletin 95/11**

(51) Int. Cl.[6] : **H01M 10/39, C04B 41/00**

(21) Application number : **90307976.2**

(22) Date of filing : **20.07.90**

(54) Sodium sulfur cell and process of manufacturing the same.

(30) Priority : **21.07.89 JP 187480/89**

(43) Date of publication of application :
**23.01.91 Bulletin 91/04**

(45) Publication of the grant of the patent :
**15.03.95 Bulletin 95/11**

(84) Designated Contracting States :
**DE FR GB IT SE**

(56) References cited :
**EP-A- 0 074 548**
**WO-A-85/00470**
**GB-A- 1 375 167**
**US-A- 4 296 052**
**J. MATER.SCI. 1982 vol. 17, no. 3, pages 753 - 759 VISWANATHAN L 'WETTING CHARACTERISTICS OF SODIUM ON BETAii-ALUMINA AND ON NASICON'**
**PATENT ABSTRACTS OF JAPAN vol. 014, no. 368 (E-0962)9 August 1990 and JP-A-2132775**
**PATENT ABSTRACTS OF JAPAN vol. 14, no. 348 (E-0957)27 July 1990 and JP-A-2121268**

(73) Proprietor : **NGK INSULATORS, LTD.**
**2-56, Suda-cho, Mizuho-ku**
**Nagoya City Aichi Pref. (JP)**
(84) **DE FR GB IT SE**
Proprietor : **The Tokyo Electric Power Co., Inc.**
**1-3, Uchisaiwai-cho, 1-chome**
**Chiyoda-ku Tokyo (JP)**
(84) **DE GB SE**

(72) Inventor : **Ohshima, Masaaki, c/o The Tokyo Electric Power Co.**
**Incorporated,**
**1-3 Uchisaiwai-Cho 1-chome**
**Chiyoda-ku, Tokyo (JP)**
Inventor : **Kobayashi, Akira, c/o The Tokyo Electric Power Co.**
**Incorporated,**
**1-3 Uchisaiwai-Cho 1-chome**
**Chiyoda-ku, Tokyo (JP)**
Inventor : **Yoshida, Akihiko**
**47-8 Nishideguchi,**
**Nakahon-Machi**
**Iwakura City, Aichi Pref. (JP)**

(74) Representative : **Paget, Hugh Charles Edward et al**
**MEWBURN ELLIS**
**York House**
**23 Kingsway**
**London WC2B 6HP (GB)**

## Description

The present invention relates to secondary batteries to be used for electric power load leveling or electric vehicles, particularly, to sodium sulfur cells adaptable for achieving prolongation of life thereof, and a process for manufacturing the same.

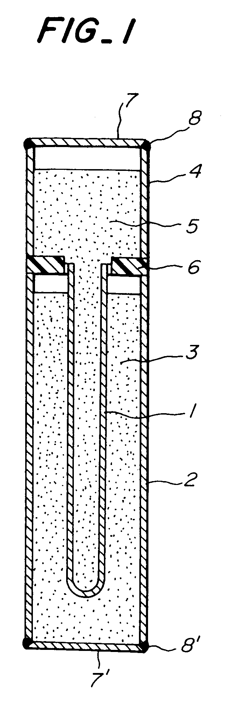

Sodium sulfur cells are high temperature type secondary cells which operate at 300°C-350°C and composed of molten sodium as a cathode active material, molten sulfur and/or sodium polysulfide as an anode active material, a sodium ion conductive ceramic as a solid electrolyte, and a metallic container. The structure of a typical sodium sulfur cell is shown in Fig. 1.

In Fig. 1, the numeral 1 indicates a sodium ion conductive beta alumina tube having a closed tip end, 2 is a metallic container functioning as an anode, 3 is sulfur or sodium polysulfide, 4 is a metallic container functioning as a cathode, 5 is sodium, 6 is a ring insulator such as an $\alpha$-alumina, and 7 is a metallic lid. As the beta alumina 1, there are $\beta''$-alumina, $\beta$-alumina, and mixtures of the both, or the like.

Processes for manufacturing the above-described sodium sulfur cells generally comprise the steps of: bonding the open end periphery of the prepared $\beta$-alumina tube 1 with the ring insulator 6 of $\alpha$-alumina or the like, by means of glass-soldering or the like; further bonding the ring insulator 6 supporting the $\alpha$-alumina tube 1, with the metallic containers 2 and 4, by a solid phase reaction or the like at a high temperature under pressure, to form upper and lower spaces; then loading the metallic containers 4 and 2 with sodium 5 and sulfur or sodium polysulfide 3, respectively; and hermetically closing the metallic containers 2 and 4 with the lids 7, 7' by means of welding 8, 8' or the like, to provide a cell.

The beta alumina, solid electrolyte, to be employed in the above-described sodium sulfur cells, has a high hygroscopicity, so that it has been known that moisture absorption causes an ionic conduction resistance to increase as well as strength to decrease. Consequently, there have arisen problems such that life of sodium sulfur cells using a highly hygroscopic beta alumina is considerably shortened as well as widely dispersed.

As regards the abovementioned problems, U.S. Patent Specification No. 3,903,225 discloses a technique to conduct, after sintering, an annealing process at a high temperature of between 1,200°C and 1,500°C for a long period of between 1 hour and 40 hours in order to obviate deterioration of electrical resistivity due to moisture absorption. Further, Japanese Patent Application Publication No. 57-15,063 discloses a technique to conduct calcination, sintering and annealing in order to minimize influences of moisture absorption.

However, as described above, even a beta alumina which has been subjected to an annealing adsorbs moisture in the manufacturing process of the cells, still remaining problems of electrical resistivity increase and strength decrease, upon completion of sodium sulfur cells. If solution of these problems is attempted, a heating means must be provided in every step, so that it presents other serious problems from aspects of mass-productivity and production cost. Alternatively, in the case of beta alumina ceramics, heating at the sintering temperature or below can be performed, whereas in the step after bonding an insulator, such as $\alpha$-alumina, by means of glass-soldering or the like, there is also presented a problem that heating at high temperatures should not be permitted from the standpoint of quality of cell component parts.

An object of the present invention is to solve the abovementioned problems and provide, by defining a step of removing water by heating, sodium sulfur cells with various characteristics not impaired by moisture absorption.

A further object of the present invention is to provide a process for manufacturing such a sodium sulfur cell.

The sodium sulfur cells according to the present invention wherein a beta alumina is used as a solid electrolyte separating a cathode active material from an anode active material, are characterized in that water content in said beta alumina is not more than 0.3 mg per $cm^2$ of the surface area of the beta alumina.

Furthermore, the process according to the present invention for manufacturing a sodium sulfur cell comprising a cathode active material, an anode active material and a beta alumina separator separating the above active materials from each other, is characterized in that water absorbed by said beta alumina after sintering is removed by heating and the resulting beta alumina containing water in an amount of not more than 0.3 mg per $cm^2$ of the surface area of the beta alumina is used as the separator.

In the above-described construction, it has been found that the problem of shortening, due to moisture absorption, of the electromotive life of the cell, can be obviated by reducing the water content in the beta alumina composing the sodium sulfur cells, to not more than 0.3 mg per $cm^2$ of the surface area of the beta alumina. Namely, sodium sulfur cells with unimpaired various characteristics can be obtained if the water absorbed in the manufacturing process of the sodium sulfur cells is constantly controlled to be not more than 0.3 $mg/cm^2$ by monitoring weight fluctuation of said beta alumina. Additionally, the water content in beta alumina is preferred to be 0.2 $mg/cm^2$ or less, more preferably 0.1 $mg/cm^2$ or less.

Furthermore, the manufacturing process according to the present invention has been accomplished based

2

on the finding of the fact that, in manufacturing processes of sodium sulfur cells, a sodium sulfur cell with a high reliability can be obtained by heating and removing water in beta alumina to decrease to 0.3 mg/cm³ or less, after sintering step of the beta alumina and before fabricating the sodium sulfur cell by loading with active materials, such as metallic sodium, sulfur or sodium polysulfide, and the like.

Additionally, as will be clear from the working examples described hereinafter, the heating temperature is preferred to be at least 300°C, desirably at least 600°C, more desirably at least 1,000°C. The heating atmosphere is preferred to be dry air, nitrogen gas, argon gas or a vacuum. The heating period is preferred to be at least 30 minutes, desirably at least 1 hour. Further, as a heating means, conventional heating furnaces are employable. However, heating by means of microwave or combination of vacuum with microwave is preferred as it can attain the object of water removal in a short period of time. Further, in order to remove the water absorbed by beta alumina, the manufacturing steps after conducting the abovementioned heating step are preferred to be performed in a moisture-free atmosphere. For example, a dry $N_2$ gas atmosphere is preferred and a water content therein is desirably -50°C or less as reduced to dew point temperature.

Additionally, the reason why the water content is expressed by the moisture absorption per unit surface area is because the water is absorbed from the surface of the beta alumina. In the case where the water absorbed by the beta alumina is removed by heating after a step of glass-soldering the beta alumina with the ring insulator, it is preferred to effect strain relaxation at a temperature of not higher than the glass-soldering temperature, preferably between the glass annealing point temperature and strain point, after heating for water removal.

The present invention will be explained in more detail hereinafter by way of example with reference to the appended drawings wherein:

Fig. 1 is a vertical sectional view of an embodiment of the sodium sulfur cell according to the present invention;

Fig. 2 is a vertical sectional view of an example of the beta alumina tube to be used in the present invention;

Fig. 3 is a graph showing a moisture absorbing rate in the thermo-hygrostat used in Example of the present invention;

Fig. 4 is a vertical sectional view illustrating an electromotion test of the cell in Example of the present invention;

Fig. 5 is a graph showing the relation of moisture content with electromotive life, in Example of the present invention; and

Fig. 6 is an example of the process flow sheet of the manufacturing process of sodium sulfur cells according to the present invention.

<u>Example 1</u>

Here is shown a relation between a water content ratio of beta alumina and an electromotive life.

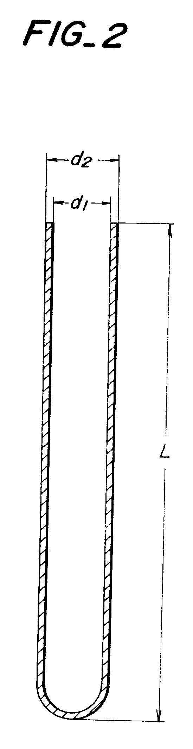

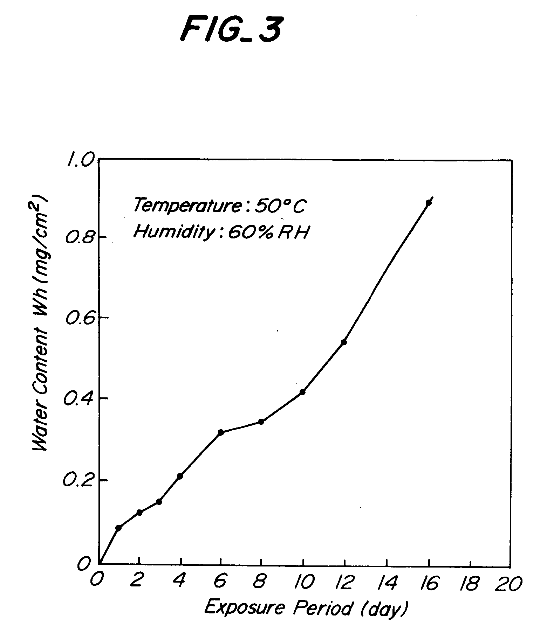

As a test material, prepared were beta alumina tubes having a vertical sectional shape as shown in Fig. 2, an outside diameter $d_1$ of 20.0 mm, an inside diameter $d_2$ of 17.6 mm, a length L of 140 mm and a surface area S of 165 cm², and beta alumina tubes having an outside diameter $d_1$ of 30.0 mm, an inside diameter $d_2$ of 26.0 mm, a length L of 140 mm and a surface area S of 253 cm². These beta alumina tubes were weighed with an electronic balance, immediately after firing, to determine the initial weight $W_1$ (g). Then, the prepared beta alumina tubes were placed in a thermo hygrostat kept at a temperature T of 50°C and a relative humidity of 60%, to absorb moisture. The absorbed moisture content was controlled, referring, as a measure, to moisture absorbing rates as shown in Fig. 3.

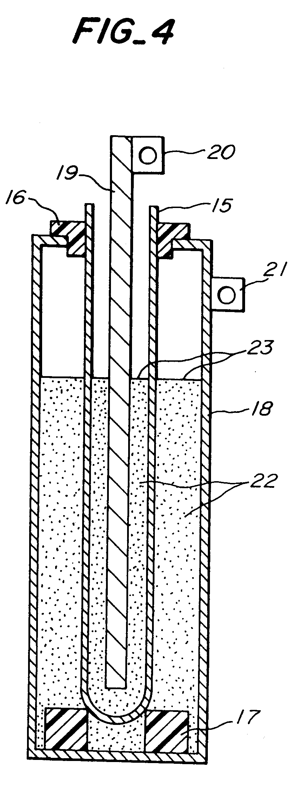

Then, the beta alumina tubes 15 having absorbed moisture were weighed with an electronic balance to determine the moisture absorbed weight $W_2$ (g). Then, for the moisture absorbed beta alumina tubes 15, an electromotion test was conducted with an Na/Na electromotion testing apparatus as shown in Fig. 4. Referring to Fig. 4, the Na/Na electromotion testing apparatus was composed of a beta alumina tube 15 to be tested, $\alpha$-alumina insulative supports 16, 17, a stainless steel container 18, a stainless steel electrode 19 and electrode terminals 20, 21. The container 18 and beta alumina tube 15 were charged with molten sodium 22. By flowing a constant electric current between the terminals 20 and 21, the electromotive life of the beta alumina tube 15 to be tested was determined. The reason why the electromotion test was conducted in the state of Na/Na instead of Na/S was to determine the pure electromotion test in the state of beta alumina tube alone by eliminating other factors, such as a difference in contact resistance caused by S, and the like. Furthermore, in Fig. 4, the molten sodium 22 was fed into the stainless steel container 18 so that the sodium liquid level 23 might reach 40 mm below the top end of the beta alumina tube 15.

The current was flowed at a temperature of 350°C with a current density of 1 A/cm², reversing the positive pole and negative pole every 120 seconds to minimize fluctuation of the sodium liquid level. An initial polarization value immediately after commencement of flowing the current was denoted by $V_1$. When the polarization value during current flowing increased to 1.5 times or more the initial polarization value $V_1$ or decreased to half or less of $V_1$, the life was regarded as exhausted and the test was stopped. An electromotive life $J_h$ (Ah/cm²) was found from the period of time from commencement of flowing the current to the stop of the test. After stopping the test, Na was removed with ethanol and the outer appearance of the beta alumina tube was visually inspected. Further, the water content was found from the above initial weight $W_1$ and moisture absorbed weight $W_2$, by the equation:

$$\Delta W \ (mg/cm^2) \ = \ \{(W_2 - W_1) \times 1{,}000\}/S.$$

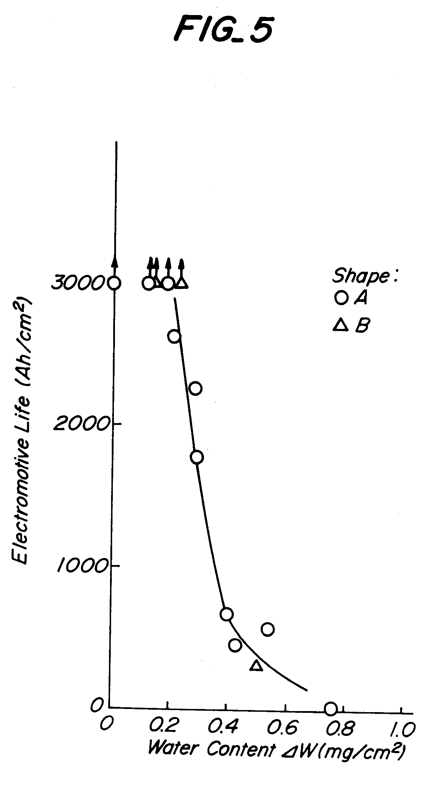

The results are shown in Table 1 and the relation of the absorbed moisture content $\Delta W$ with the electromotive life is shown in Fig. 5. Here, the initial polarization value $V_1$ is found from the equation: $V_1 = V_{1a} - V_{1b}$, where $V_{1a}$ is a voltage between the electrode terminals 20 and 21 at the abovementioned constant current density, and $V_{1b}$ is a voltage between the electrode terminals 20 and 21 when the beta alumina tube 15 has been removed and the loaded sodium short-circuits.

## Table 1

| | Run No. | Shape | Initial weight $W_1$ (g) | Moisture absorbed weight $W_2$ (g) | $\Delta W$ (mg/cm²) | Initial polarization value $V_1$ (V) | Electromotive life $J_h$ (Ah/cm²) |
|---|---|---|---|---|---|---|---|
| Present invention | 1 | A | 31.805 | – *1 | 0 | 0.61 | ≧3000 |
| | 2 | A | 31.632 | 31.652 | 0.12 | 0.64 | ≧3000 |
| | 3 | A | 31.934 | 31.964 | 0.18 | 0.65 | ≧3000 |
| | 4 | A | 31.858 | 31.898 | 0.21 | 0.60 | 2618 |
| | 5 | A | 31.479 | 31.525 | 0.28 | 0.68 | 2263 |
| | 6 | A | 31.491 | 31.539 | 0.29 | 0.69 | 1780 |
| | 7 | B | 80.990 | 81.025 | 0.14 | 1.01 | ≧3000 |
| | 8 | B | 80.922 | 80.978 | 0.22 | 1.05 | ≧3000 |
| Comparative Example | 9 | A | 31.773 | 31.839 | 0.40 | 0.72 | 679 |
| | 10 | A | 31.815 | 31.886 | 0.43 | 2.54 | 462 |
| | 11 | A | 31.546 | 31.635 | 0.54 | 1.96 | 579 |
| | 12 | A | 31.619 | 31.744 | 0.76 | 5.72 | 14 |
| | 13 | B | 81.02 | 81.147 | 0.50 | 3.28 | 391 |

A:S=165 cm², B:S=253 cm²   *1) not moisturized

In Table 1 and Fig. 5, shown is the result that, when the water content is not more than 0.3 mg/cm², the electromotive life is satisfactorily prolonged and substantially no abnormality is observed on the outer appearance. Further, it is understood that the water content to attain a more prolonged electromotive life is preferably not more than 0.2 mg/cm², more preferably 0.1 mg/cm².

Example 2

Here is shown an influence of heating on each step of the manufacturing process of sodium sulfur cells.

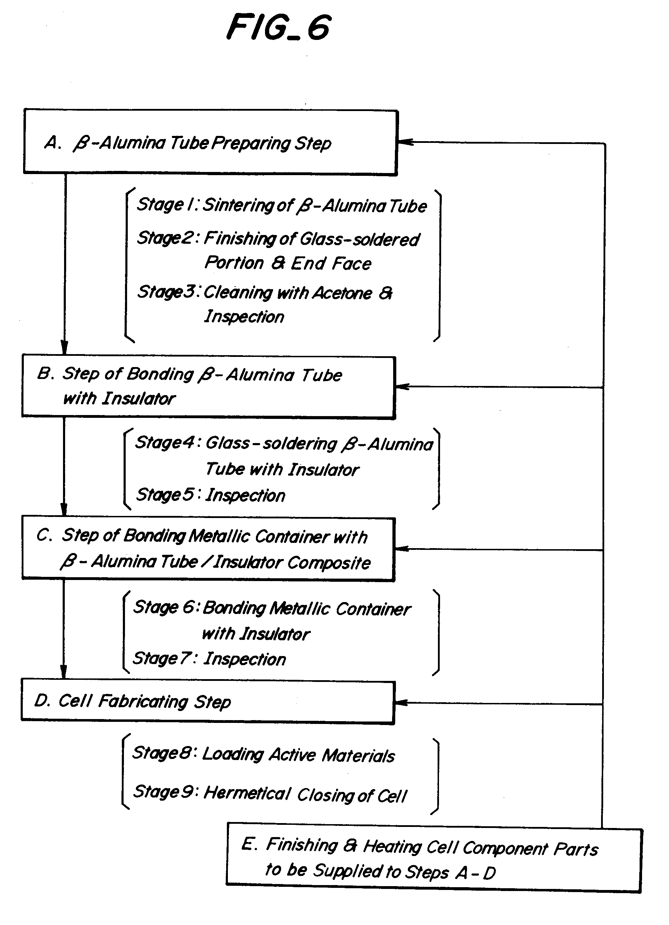

Fig. 6 shows a process flow sheet of the manufacturing process of sodium sulfur cells according to the present invention. In Fig. 6, the manufacturing process of the present invention includes the steps of:

A. preparing a beta alumina tube, comprising the stages of:

(1) sintering a beta alumina tube,

(2) finishing glass-soldered portions and the end face, and

(3) cleaning with acetone, followed by inspection;

B. bonding the beta alumina tube with the insulator, comprising the stages of:

(4) glass-soldering the beta alumina tube with an insulator, and

(5) inspection;

C. bonding a metallic container with a composite of the beta alumina tube and the insulator, comprising the stages of:

(6) bonding a metallic container with the insulator, and

(7) inspection;

D. forming a cell, comprising the stages of:

(8) loading active materials, and

(9) hermetically closing the cell; and

E. finishing and heat-treating cell component parts to be supplied to each of the steps A to D.

On the outset, in order to check the moisture absorbing condition of beta alumina tubes in each of the steps A-D under exposure to an ambient atmosphere such as air, a weight gain in each step was measured with respect to Lots I and II. Lot I shows products produced by relatively rapid progress of the manufacturing process in consecutive fine winter days, namely, under a condition hard to absorb moisture, and lot II shows products produced by slow progress of the manufacturing process in consecutive rainy, early spring days, namely, under a condition susceptible to moisture absorption. Further, as for Lot II, a one day storing step was inserted in between successive steps. Additionally, from the weight $W_1$ (g) immediately after sintering and the weight $W_2$ (g) in each step, of the beta alumina tube, the absorbed moisture content was calculated by the formula:

$$\{(W_2 - W_1) \times 1{,}000\}/S \text{ (mg/cm}^2).$$

Further, in each step after the step of glass-soldering the beta alumina tube with the insulator, as for the weight $W_2$ and initial weight $W_1$ whereupon the weight gain was based, there were used, respectively, a weight measured with an electronic balance of a beta alumina tube alone which had been cut out in dry from the composite body and a weight measured after then heating at 1,000°C for 1 hour, in each step. The results are shown in Table 2.

## Table 2

| Step | | Water content $(mg/cm^2)$ | |
|---|---|---|---|
| | | Lot I | Lot II |
| A | Before Stage 2 | 0.11 | 0.19 |
| | Before Stage 3 | 0.18 | 0.22 |
| | After Stage 3 | 0.18 | 0.24 |
| B | Before Stage 4 | 0.25 | 0.50 |
| | After Stage 4 | 0.10 | 0.15 |
| | After Stage 5 | 0.20 | 0.36 |
| C | Before Stage 6 | 0.22 | 0.62 |
| | After Stage 6 | 0.18 | 0.35 |
| D | Before Stage 8 | 0.23 | 0.59 |

From the results of the weight gain shown in Table 2, it can be understood that the beta alumina tube absorbs moisture in each step. Further, the decrease of the moisture absorption on the stage 4 was caused by heating for glass-soldering, and also the decrease of the moisture absorption on the stage 6 was caused by heating for bonding.

Then, with respect to a sodium sulfur cell fabricated after heating at 1,000°C for 1 hour after completion of the steps A, B and C and immediately before the step D, an electromotive life was measured, using Na and S as active materials and by means of a charge-discharge test at 350°C, with a current density of 100 mA/cm², in an 8 hour-cycle. When a mean value $V_{BC}$ over the period of charging or a mean value $V_{BD}$ over the period of discharging, of the voltage drop $V_B$ due to the resistance of the cell, increased to 1.5 times or more, or decreased to half or less, of the value in the first charge-discharge cycle, the life was regarded as exhausted.

5

Then, an electromotive life $J_h$ (Ah/cm²) was found from the period of time from commencement of flowing the current to the stop of the test. Here established is an equation, $V_B = |V_1 - V_{OCV}|$, where $V_1$ represents a voltage between cell electrodes at the above-described constant current density, and $V_{OCV}$ represents an electromotive force when the cell electrodes circuit is opened. The results are shown in Table 3.

## Table 3

| No. | After Stage A-(3) 1000°C×1hr in air | After Stage B-(5) 1000°C×1hr in air *1 | Before Stage C-(6) 1000°C×1hr in air *1 | After Stage C-(7) 500°C×2hr in N₂ *1 | Electro-motive life $J_h$ (Ah/cm²) |
|---|---|---|---|---|---|
| 1 | × | × | × | × | 126 |
| 2 | ○ | ○ | ○ | ○ | 1325 |
| 3 | ○ | × | × | × | 796 |
| 4 | × | × | × | ○ | 957 |
| 5 | ○ | ○ | × | ○ | 962 |
| 6 | ○ | × | ○ | × | 815 |

*1   Strain relaxation of glass-soldering was effected during cooling (565°C×1hr.)

It can be understood from the results shown in Table 3 that a satisfactory life of cell is obtained in Samples Nos. 2-6 which were heated in the steps after firing the beta alumina.

## Example 3

Here are shown various heating conditions for heating moisture absorbed beta alumina tubes.

In the same manner as that of Example 1, beta alumina tubes containing water $\Delta W_1$ in various amounts were prepared. The prepared tubes were heated under various heating conditions as shown in Table 4, to remove the water contained therein. After heating, the tubes were weighed with an electronic balance to determine their weights, $W_3$. The water contents after heating, $\Delta W_2$, were found by the following equation the same as Example 1:

$$\Delta W_2 \text{ (mg/cm}^2) = \{(W_3 - W_1) \times 1{,}000\}/S$$

wherein $W_1$ is an initial weight (g) determined immediately after sintering.

Then, in the same manner as that of Example 1, the initial polarization value $V_1$ and electromotive life were determined with an Na/Na electromotion testing apparatus as shown in Fig. 4. The results are shown in Table 4.

6

Table 4

| | | | Heating conditions | | | | | |
|---|---|---|---|---|---|---|---|---|
| No. | Initial weight $W_1$ (g) | $\triangle W_1$ (mg/cm²) | Temperature (°C) | Heating period (hr) | Atmosphere | $\triangle W_2$ (mg/cm²) | Initial polarization value $V_1$ (V) | Electromotive life $J_h$ (Ah/cm²) |
| 1 | 33.528 | 0.28 | 300 | 0.5 | air | 0.19 | 0.63 | 2543 |
| 2 | 33.618 | 0.30 | 300 | 1.0 | vacuum 10⁻² Torr | 0.15 | 0.61 | 2716 |
| 3 | 33.627 | 0.32 | 300 | 2.0 | air | 0.20 | 0.65 | 2915 |
| 4 | 33.741 | 0.27 | 600 | 1.0 | air | 0.10 | 0.60 | ≧3000 |
| 5 | 33.442 | 0.33 | 800 | 1.0 | dry air | 0.09 | 0.62 | 2391 |
| 6 | 33.318 | 0.31 | 1000 | 1.0 | air | 0.05 | 0.63 | ≧3000 |
| 7 | 33.344 | 0.29 | microwave heating | 0.25 | air | 0.21 | 0.68 | 2319 |
| 8 | 33.332 | 0.28 | 200 | 2.0 | dry N₂ | 0.22 | 0.64 | 2159 |
| 9 | 33.510 | 0.34 | 100 | 2.0 | dry air | 0.25 | 0.69 | 1998 |
| 10 | 33.602 | 0.27 | 300 | 0.25 | dry N₂ | 0.18 | 0.64 | 2754 |
| 11 | 33.750 | 0.28 | no heating | – | – | – | 0.68 | 2263 |
| 12 | 33.414 | 0.29 | " | – | – | – | 0.69 | 1780 |
| 1 | 33.491 | 0.71 | 800 | 1.0 | dry N₂ | 0.25 | 0.92 | 210 * |
| 2 | 33.584 | 0.68 | 600 | 1.0 | dry N₂ | 0.31 | 1.04 | 57 |

Present invention: No. 1–10
Comparative Example: No. 11–12
Referential Example: No. 1–2

* Cracks were formed on the surface of the $\beta$-alumina tube, after heating.

It can be understood from the results shown in Table 4 that the heating is effective as a means for removing water absorbed in beta alumina tubes. It is also found that the heating temperature is preferred to be at least 300°C, desirably at least 600°C, more desirably at least 1,000°C, the heating atmosphere is preferably in air,

7

dry nitrogen gas, dry argon gas, or vacuum and the heating period is preferred to be at least 30 minutes, desirably at least 1 hour. Furthermore, it is found that the microwave heating among other heating means is preferred since it can attain the object of removing water for a short period of time. As is clear from Referential Example 1, it is also found that tubes absorbed excessive water are not preferred, even if these are subjected to heating.

As is clear from the above explanation, according to the process of the invention for manufacturing sodium sulfur cells wherein heating is conducted after sintering beta alumina tubes, sodium sulfur cells with a high reliability and unimpaired, excellent characteristics, such as a prolonged electromotive life or the like, can be provided with a high productivity at a low cost.

## Claims

1. A process for manufacturing a sodium sulfur cell comprising a cathode active material (5), an anode active material (3) and a beta alumina tube (1) separating the above active materials from each other, which process comprises heating said beta alumina tube (1) to reduce its water content to not more than 0.3 mg per $cm^2$ of the surface area of the beta alumina tube, thereafter constantly controlling said water content to be not more than 0.3 mg per $cm^2$, and then fabricating said cell by loading said active materials when said beta alumina tube has a water content of not more than 0.3 mg per $cm^2$ of its surface area.

2. The process according to claim 1, wherein the water content is reduced to not more than 0.1 mg per $cm^2$ of the surface area of the beta alumina tube (1).

3. The process according to claim 1 or 2, wherein the heating is conducted at a temperature of at least 300°C.

4. The process according to claim 1 or 2, wherein the heating is conducted at a temperature of at least 600°C.

5. The process according to claim 1 or 2, wherein the heating is conducted at a temperature of at least 1,000°C.

6. The process according to any one of claims 1 to 5, wherein the heating is conducted in a dry atmosphere selected from dry air, nitrogen gas, argon gas and vacuum.

7. The process according to any one of claims 1 to 8, wherein the heating is conducted by means of microwave heating in vacuum.

8. The process according to any one of claims 1 to 6, wherein the heating is conducted for at least 30 minutes.

9. The process according to any one of claims 1 to 6, wherein the heating is conducted for at least 1 hour.

## Patentansprüche

1. Verfahren zur Herstellung einer Natrium-Schwefel-Zelle, umfassend ein kathodenaktives Material (5), ein anodenaktives Material (3) und ein β-Aluminiumoxid-Rohr (1), das die genannten aktiven Materialien voneinander trennt, wobei das Verfahren umfaßt: Erhitzen des β-Aluminiumoxid-Rohrs (1), um seinen Wassergehalt auf nicht mehr als 0,3 mg/$cm^2$ der Oberfläche des β-Aluminiumoxid-Rohrs zu verringern, anschließend konstantes Steuern des Wassergehalts auf nicht mehr als 0,3 mg/$cm^2$, und danach Herstellen der Zelle durch Einfüllen der aktiven Materialien, wenn das β-Aluminiumoxid-Rohr einen Wassergehalt von nicht mehr als 0,3 mg/$cm^2$ seiner Oberfläche aufweist.

2. Verfahren nach Anspruch 1, worin der Wassergehalt auf nicht mehr als 0,1 mg/$cm^2$ der Oberfläche des β-Aluminiumoxid-Rohrs (1) verringert wird.

3. Verfahren nach Anspruch 1 oder 2, worin das Erhitzen bei einer Temperatur von zumindest 300°C erfolgt.

4. Verfahren nach Anspruch 1 oder 2, worin das Erhitzen bei einer Temperatur von zumindest 600°C erfolgt.

5. Verfahren nach Anspruch 1 oder 2, worin das Erhitzen bei einer Temperatur von zumindest 1.000°C erfolgt.

**6.** Verfahren nach irgendeinem der Ansprüche 1 - 5, worin das Erhitzen in einer trockenen Atmosphäre, ausgewählt aus trockener Luft, Stickstoffgas, Argongas und Vakuum, erfolgt.

**7.** Verfahren nach irgendeinem der Ansprüche 1 - 6, worin das Erhitzen durch Mikrowellenerhitzen im Vakuum erfolgt.

**8.** Verfahren nach irgendeinem der Ansprüche 1 - 6, worin das Erhitzen zumindest 30 min lang erfolgt.

**9.** Verfahren nach irgendeinem der Ansprüche 1 - 6, worin das Erhitzen zumindest 1 h lang erfolgt.

**Revendications**

**1.** Procédé pour la fabrication d'une cellule à sulfure de sodium comprenant une matière cathodique active (5), une matière anodique active (3) et un tube de bêta-alumine (1) séparant les matières actives ci-dessus l'une de l'autre, procédé qui comprend le chauffage dudit tube de bêta-alumine (1) pour réduire sa teneur en eau à pas plus de 0,3 mg par $cm^2$ de la superficie du tube de bêta-alumine, en maîtrisant constamment par la suite ladite teneur en eau pour qu'elle ne dépasse pas 0,3 mg par $cm^2$, puis la fabrication de ladite cellule en chargeant lesdites matières actives lorsque ledit tube de bêta-alumine possède une teneur en eau ne dépassant pas 0,3 mg par $cm^2$ de sa superficie.

**2.** Procédé selon la revendication 1, dans lequel on réduit la teneur en eau à pas plus de 0,1 mg par $cm^2$ de la surface du tube de bêta-alumine (1).

**3.** Procédé selon la revendication 1 ou 2, dans lequel on entreprend le chauffage à une température d'au moins 300°C.

**4.** Procédé selon la revendication 1 ou 2, dans lequel on entreprend le chauffage à une température d'au moins 600°C.

**5.** Procédé selon la revendication 1 ou 2, dans lequel on entreprend le chauffage à une température d'au moins 1000°C.

**6.** Procédé selon l'une quelconque des revendications 1 à 5, dans lequel on entreprend le chauffage dans une atmosphère sèche choisie parmi l'air sec, l'azote gazeux, l'argon gazeux et le vide.

**7.** Procédé selon l'une quelconque des revendications 1 à 6, dans lequel on entreprend le chauffage au moyen d'un chauffage par micro-ondes sous vide.

**8.** Procédé selon l'une quelconque des revendications 1 à 6, dans lequel on réalise le chauffage pendant au moins 30 minutes.

**9.** Procédé selon l'une quelconque des revendications 1 à 6, dans lequel on réalise le chauffage pendant au moins une heure.

# FIG_1

# FIG_2

# FIG_3

# FIG_4

# FIG_5

# FIG_6

**A.** β-Alumina Tube Preparing Step

> Stage 1: Sintering of β-Alumina Tube
>
> Stage 2: Finishing of Glass-soldered Portion & End Face
>
> Stage 3: Cleaning with Acetone & Inspection

**B.** Step of Bonding β-Alumina Tube with Insulator

> Stage 4: Glass-soldering β-Alumina Tube with Insulator
>
> Stage 5: Inspection

**C.** Step of Bonding Metallic Container with β-Alumina Tube / Insulator Composite

> Stage 6: Bonding Metallic Container with Insulator
>
> Stage 7: Inspection

**D.** Cell Fabricating Step

> Stage 8: Loading Active Materials
>
> Stage 9: Hermetical Closing of Cell

**E.** Finishing & Heating Cell Component Parts to be Supplied to Steps A - D